# EUROPÄISCHE PATENTANMELDUNG

(11) **EP 4 636 260 A1**
(43) Veröffentlichungstag der Anmeldung: **22.10.2025**
(21) Anmeldenummer: 25169688.6
(22) Anmeldetag: 10.04.2025
(51) Int. Cl.: F15B 13/08, F15B 20/00, F15B 13/00

(54) **SICHERHEITSMODUL-AUFBAU, VENTILINSEL UND VERFAHREN**

(30) Priorität: 19.04.2024 DE 102024111044
(71) Anmelder: Festo SE & Co. KG, 73734 Esslingen (DE)
(72) Erfinder: Fano, Reinhard, 72663 Großbettlingen (DE); Ringelspacher, Oliver, 73732 Esslingen (DE); Wenske, Eduard, 70806 Kornwestheim (DE); Saric, Boris, 73734 Esslingen (DE)
(74) Vertreter: Patentanwälte Magenbauer & Kollegen Partnerschaft mbB

(57) **Zusammenfassung**

Die Erfindung betrifft einen Sicherheitsmodul-Aufbau (2) für eine Ventilinsel (28), umfassend ein Sicherheitsmodul (7) mit einer Schalteinrichtung (9) zur Abschaltung einer elektrischen Versorgung mehrerer auf einem Trägerabschnitt (3) der Ventilinsel (28) angeordneter Ventilmodule (4), ferner umfassend ein an dem Sicherheitsmodul (7) angeordnetes Adaptermodul (8), über das das Sicherheitsmodul (7) an dem Trägerabschnitt (3) anbringbar ist.

## Beschreibung

Die Erfindung betrifft einen Sicherheitsmodul-Aufbau für eine Ventilinsel, umfassend ein Sicherheitsmodul mit einer Schalteinrichtung zur Abschaltung einer elektrischen Versorgung mehrerer auf einem Trägerabschnitt der Ventilinsel angeordneter Ventilmodule.

Eine Aufgabe der Erfindung besteht darin, einen Sicherheitsmodul-Aufbau bereitzustellen, mit dem das Sicherheitsmodul effizient und/oder flexibel einsetzbar ist.

Die Aufgabe wird gelöst durch ein Sicherheitsmodul-Aufbau gemäß Anspruch 1. Der Sicherheitsmodul-Aufbau umfasst ein an dem Sicherheitsmodul angeordnetes Adaptermodul, über das das Sicherheitsmodul an dem Trägerabschnitt der Ventilinsel anbringbar ist.

Mittels des Adaptermoduls ist es insbesondere möglich, das Sicherheitsmodul auf einer Ventilinsel einer bestimmten Baugröße einzusetzen, ohne dass das Sicherheitsmodul speziell bzw. ausschließlich für diese Baugröße ausgelegt sein muss. Insbesondere wird es möglich, für verschiedene Baugrößen von Ventilinseln baugleiche Sicherheitsmodule zu verwenden. Mittels einer Bereitstellung entsprechender Adaptermodule kann dann eine Befestigung der baugleichen Sicherheitsmodule auf Ventilinseln verschiedener Baugröße ermöglicht werden. Dadurch wird ein flexibler und/oder effizienter Einsatz eines Sicherheitsmoduls ermöglicht; insbesondere muss dadurch nicht für jede Baugröße ein eigenes Sicherheitsmodul entwickelt werden.

Vorteilhafte Weiterbildungen sind Gegenstand der Unteransprüche.

Die Erfindung betrifft ferner eine Ventilinsel, umfassend einen Trägerabschnitt, mehrere auf dem Trägerabschnitt angeordnete Ventilmodule und den Sicherheitsmodul-Aufbau, wobei der Sicherheitsmodul-Aufbau auf dem Trägerabschnitt angeordnet ist und ausgebildet ist, mittels der Schalteinrichtung die elektrische Versorgung der Ventilmodule abzuschalten.

Die Erfindung betrifft ferner ein Verfahren zum Betrieb der Ventilinsel, umfassend den Schritt: Abschalten der elektrischen Versorgung der Ventilmodule mittels der Schalteinrichtung.

Weitere exemplarische Details sowie beispielhafte Ausführungsformen werden nachstehend unter Bezugnahme auf die

Figuren erläutert. Dabei zeigt
- Figur 1: eine schematische Darstellung einer Anordnung aus einem Sicherheitsmodul-Aufbau und einem Trägerabschnitt,
- Figur 2: eine Schnittdarstellung einer Ventilinsel einer ersten Baugröße, wobei der Schnitt durch einen Sicherheitsmodul-Aufbau und einen Trägerabschnitt verläuft,
- Figur 3: eine perspektivische Darstellung eines Adaptermoduls,
- Figur 4: eine Schnittdarstellung einer Ventilinsel einer zweiten Baugröße, wobei der Schnitt durch einen Sicherheitsmodul-Aufbau und einen Trägerabschnitt verläuft,
- Figur 5: eine perspektivische Darstellung der Ventilinsel der ersten Baugröße,
- Figur 6: eine perspektivische Darstellung der Ventilinsel der zweiten Baugröße, und
- Figur 7: ein Blockdiagramm einer Verschaltung einer Ventilinsel.

In den nachfolgenden Erläuterungen wird Bezug genommen auf die in den Zeichnungen eingezeichneten, orthogonal zueinander ausgerichteten Raumrichtungen x-Richtung, y-Richtung und z-Richtung. Die x-Richtung und y-Richtung können auch als horizontale Richtungen und die z-Richtung als vertikale Richtung oder Höhenrichtung bezeichnet werden.

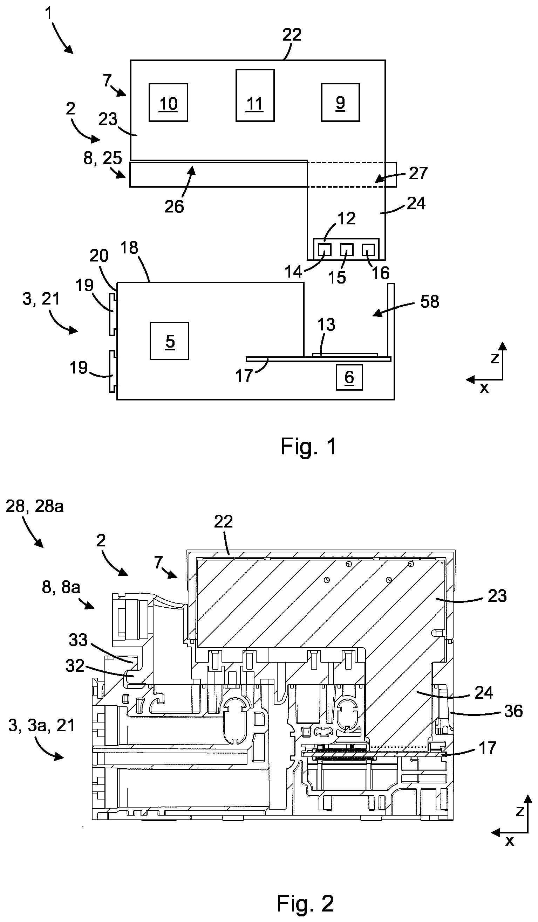

Die Figur 1 zeigt eine Anordnung 1, die einen Sicherheitsmodul-Aufbau 2 und einen Trägerabschnitt 3 umfasst. Die Anordnung 1 ist beispielsweise eine Ventilinsel 28 oder Teil einer Ventilinsel 28. Der Sicherheitsmodul-Aufbau 2 kann auch für sich genommen - also insbesondere ohne den Trägerabschnitt 3 - bereitgestellt sein. Der Sicherheitsmodul-Aufbau 2 ist exemplarisch in einem von dem Trägerabschnitt 3 abgenommenen Zustand gezeigt. In Verwendung ist der Sicherheitsmodul-Aufbau 2 an dem Trägerabschnitt 3 befestigt.

Der Sicherheitsmodul-Aufbau 2 umfasst ein Sicherheitsmodul 7 und ein Adaptermodul 8. Das Adaptermodul 8 ist am Sicherheitsmodul 7 angeordnet. Beispielsweise ist das Adaptermodul 8 am Sicherheitsmodul 7 befestigt, insbesondere lösbar, vorzugsweise werkzeuglos lösbar, befestigt. Die Befestigung des Adaptermoduls 8 am Sicherheitsmodul 7 ist beispielsweise dadurch gegeben, dass das Sicherheitsmodul 7 über Schrauben, die durch das Sicherheitsmodul 7 und durch das Adaptermodul 8 verlaufen, an dem Trägerabschnitt 3 befestigt ist. Das Sicherheitsmodul 7 und das Adaptermodul 8 können auch jeweils für sich genommen bereitgestellt sein. Das Sicherheitsmodul 7 und das Adaptermodul 8 sind insbesondere separate Komponenten.

Das Sicherheitsmodul 7 umfasst exemplarisch eine Schalteinrichtung 9 und/oder eine Lichtausgabeeinrichtung 11. Die Schalteinrichtung 9 dient dazu, eine elektrische Versorgung von Ventilmodulen 4 der Ventilinsel 28 abzuschalten. Die Lichtausgabeeinrichtung 11 umfasst beispielsweise eine oder mehrere LEDs zur Ausgabe eines von einem Anwender wahrnehmbaren optischen Signals und dient insbesondere dazu, einen Sicherheitszustand und/oder einen Normalzustand des Sicherheitsmoduls 7 anzuzeigen. Im Sicherheitszustand ist die elektrische Versorgung der Ventilmoduls 4 mittels der Schalteinrichtung 9 abgeschaltet und im Normalzustand ist die elektrische Versorgung der Ventilmodule 4 nicht mittels der Schalteinrichtung 9 abgeschaltet ist.

Bevorzugt umfasst das Sicherheitsmodul 7 eine Steuereinheit 10, die insbesondere zur Ansteuerung der Schalteinrichtung 9 und/oder der Lichtausgabeeinrichtung 11 dient. Die Schalteinrichtung 9 ist beispielsweise als Mikrocontroller ausgeführt.

Zweckmäßigerweise umfasst das Sicherheitsmodul 7 eine elektrische Sicherheitsmodul-Anschlussanordnung 12, über die das Sicherheitsmodul 7 zum Zwecke der Spannungsversorgung und/oder Kommunikationsanbindung an einen elektrischen Trägerabschnitt-Anschluss 13 des Trägerabschnitts 3 anschließbar ist. Die elektrische Sicherheitsmodul-Anschlussanordnung 12 umfasst zweckmäßigerweise einen Kommunikationsanschluss 14 und/oder einen ersten elektrischen Versorgungsanschluss 15. Bevorzugt verfügt die elektrische Sicherheitsmodul-Anschlussanordnung 12 ferner über einen zweiten elektrischen Versorgungsanschluss 16. Der Kommunikationsanschluss 14 ist beispielsweise als Busanschluss ausgeführt.

Bevorzugt ist das Sicherheitsmodul 7 über den Kommunikationsanschluss 14 an einen Kommunikationsbus der Ventilinsel 28 anschließbar. Das Sicherheitsmodul 7, vorzugsweise die Steuereinheit 10, ist insbesondere ausgebildet, über den Kommunikationsanschluss 14 ein Sicherheitssignal zu empfangen und gemäß dem Sicherheitssignal die elektrische Versorgung der Ventilmodule 4 abzuschalten. Zweckmäßigerweise wird das Sicherheitsmodul 7 durch das Sicherheitssignal von dem Normalzustand in den Sicherheitszustand versetzt.

Das Sicherheitsmodul 7 verfügt zweckmäßigerweise über ein Sicherheitsmodul-Gehäuse 22, das insbesondere das Außengehäuse des Sicherheitsmoduls 7 darstellt. Zweckmäßigerweise sind die Schalteinrichtung 9, die Steuereinheit 10 und/oder die Lichtausgabeeinrichtung 11 in dem Sicherheitsmodul-Gehäuse 22 angeordnet. Die Sicherheitsmodul-Anschlussanordnung 12 befindet sich zweckmäßigerweise außen am Sicherheitsmodul-Gehäuse 22.

Das Sicherheitsmodul 7 hat vorzugsweise eine L-förmige oder T-förmige Grundgestalt (insbesondere in einer x-z-Ansicht). Das Sicherheitsmodul 7 und/oder der Sicherheitsmodul-Aufbau 2 ist insbesondere plattenförmig ausgeführt. Exemplarisch verfügt das Sicherheitsmodul 7 über einen Sicherheitsmodul-Hauptabschnitt 23. Vorzugsweise verfügt das Sicherheitsmodul 7 über einen von dem Sicherheitsmodul-Hauptabschnitt 23 nach unten abragenden Sicherheitsmodul-Anschlussabschnitt 24, der zweckmäßigerweise die Sichereitsmodul-Anschlussanordnung 12 aufweist, insbesondere an seiner Unterseite.

Der Sicherheitsmodul-Anschlussabschnitt 24 ist exemplarisch ausschließlich in der hinteren Hälfte der x-Erstreckung (insbesondere der Längserstreckung) des Sicherheitsmodul-Hauptabschnitts 23 angeordnet. Die z-Erstreckung des Sicherheitsmodul-Anschlussabschnitts 24 beträgt vorzugsweise wenigstens 60% der z-Erstreckung des Sicherheitsmodul-Hauptabschnitts 23 und kann insbesondere größer als die z-Erstreckung des Sicherheitsmodul-Hauptabschnitts 23 sein. Die x-Erstreckung des Sicherheitsmodul-Anschlussabschnitts 24 beträgt vorzugsweise maximal 50% oder maximal 35% der x-Erstreckung des Sicherheitsmodul-Hauptabschnitts 23.

Exemplarisch weist der Sicherheitsmodul-Hauptabschnitt 23 und/oder der Sicherheitsmodul-Anschlussabschnittt 24 in einer x-z-Ansicht jeweils eine im Wesentlichen rechteckige Grundgestalt auf. Die y-Erstreckung des Sicherheitsmoduls 7, insbesondere des Sicherheitsmodul-Hauptabschnitts 23, beträgt zweckmäßigerweise maximal 30 % oder 50 % der z-Erstreckung des Sicherheitsmoduls 7, insbesondere des Sicherheitsmodul-Hauptabschnitts 23. Die x-Erstreckung des Sicherheitsmoduls 7, insbesondere des Sicherheitsmodul-Hauptabschnitts 23, ist zweckmäßigerweise wenigstens das Vierfache oder Fünffache der y-Erstreckung des Sicherheitsmoduls 7, insbesondere des Sicherheitsmodul-Hauptabschnitts 23. In einem Zustand, in dem der Sicherheitsmodul-Aufbau 2 an dem Trägerabschnitt 3 angebracht ist, erstreckt sich das Sicherheitsmodul 7, insbesondere der Sicherheitsmodul-Hauptabschnitt 23, vorzugsweise über wenigstens 50% oder wenigstens 80% der x-Erstreckung des Trägerabschnitts 3 (und/oder der Ventilinsel 28, auf der sich der Sicherheitsmodul-Aufbau 2 befindet).

Das Adaptermodul 8 ist vorzugsweise länglich ausgeführt. Die Längsrichtung des Adaptermoduls 8 ist parallel zur x-Richtung ausgerichtet. In seiner Längsrichtung erstreckt sich das Adaptermodul 8 vorzugsweise zumindest über die Längserstreckung (also exemplarisch die x-Erstreckung) des Sicherheitsmoduls 7 hinweg. Die x-Erstreckung des Adaptermoduls 8 ist also zweckmäßigerweise größer als die x-Erstreckung des Sicherheitsmoduls 7.

Die z-Erstreckung des Adaptermoduls 8 beträgt zweckmäßigerweise maximal 30% oder maximal 50% der x-Erstreckung des Adaptermoduls 8. Die y-Erstreckung des Adaptermoduls 8 beträgt zweckmäßigerweise maximal 20% oder maximal 30% der x-Erstreckung des Adaptermoduls 8. Das Adaptermodul 8 verfügt vorzugsweise über einen Adaptermodul-Hauptabschnitt 25, der exemplarisch eine quaderförmige Grundgestalt hat. Die y-Erstreckung und/oder die z-Erstreckung des Adaptermodul-Hauptabschnitts 25 beträgt zweckmäßigerweise jeweils maximal 20% oder maximal 30% der x-Erstreckung des Adaptermodul-Hauptabschnitts 25.

Das Adaptermodul 8 ist zweckmäßigerweise an einer Unterseite 26 des Sicherheitsmoduls 7, insbesondere des Sicherheitsmodul-Hauptabschnitts 23, angeordnet. In einem Zustand, in dem der Sicherheitsmodul-Aufbau 2 an dem Trägerabschnitt 3 befestigt ist, befindet sich das Adaptermodul 8 (insbesondere mit seinem Adaptermodul-Hauptabschnitt 25) zweckmäßigerweise in z-Richtung zwischen dem Sicherheitsmodul 7, insbesondere dem Sicherheitsmodul-Hauptabschnitt 23, und dem Trägerabschnitt 3, insbesondere der Oberseite des Trägerabschnitts 3. In dem Zustand, in dem der Sicherheitsmodul-Aufbau 2 an dem Trägerabschnitt 3 befestigt ist, ist zweckmäßigerweise das Sicherheitsmodul 7 und/oder das Adaptermodul 8 mit seiner jeweiligen Längsachse in x-Richtung ausgerichtet und/oder mit seiner jeweiligen Längsseite normal zur y-Richtung ausgerichtet und/oder mit seiner jeweiligen Oberseite normal zur z-Richtung ausgerichtet. In dem Zustand, in dem der Sicherheitsmodul-Aufbau 2 an dem Trägerabschnitt 3 befestigt ist, liegt zweckmäßigerweise das Adaptermodul 8, insbesondere der Adaptermodul-Hauptabschnitt 25, mit seiner Oberseite an der Unterseite 26 des Sicherheitsmodul-Hauptabschnitts 23 an, und/oder liegt das Adaptermodul 8, insbesondere der Adaptermodul-Hauptabschnitt 25, mit seiner Unterseite an der Oberseite 18 des Trägerabschnitts 3 an. In dem Zustand, in dem der Sicherheitsmodul-Aufbau 2 an dem Trägerabschnitt 3 befestigt ist, kontaktiert zweckmäßigerweise die Sicherheitsmodul-Anschlussanordnung 12 den Trägerabschnitt-Anschluss 13 und/oder der Sicherheitsmodul-Anschlussabschnitt 24 ist in die Vertiefung 58 eingesetzt.

Das Adaptermodul 8 umfasst vorzugsweise eine Durchbrechung 27, die exemplarisch in einem Boden des Adaptermodul-Hauptabschnitts 25 angeordnet ist. Die Durchbrechung 27 befindet sich vorzugsweise in x-Richtung in einer hinteren Hälfte des Adaptermoduls 8. Exemplarisch erstreckt sich der Sicherheitsmodul-Anschlussabschnitt 24 durch die Durchbrechung 27 hindurch. Der Sicherheitsmodul-Hauptabschnitt 23 ist exemplarisch in z-Richtung oberhalb der Durchbrechung 27 angeordnet und/oder die Sicherheitsmodul-Anschlussanordnung 12 ist unterhalb der Durchbrechung 27 angeordnet.

Bevorzugt ist das Adaptermodul 8 rein passiv ausgeführt. Insbesondere verfügt das Adaptermodul 8 über keine elektrischen oder elektronischen Komponenten. Vorzugsweise verfügt das Adaptermodul 8 über keine aktiven pneumatischen Komponenten. Das Adaptermodul 8 kann optional einstückig ausgeführt sein.

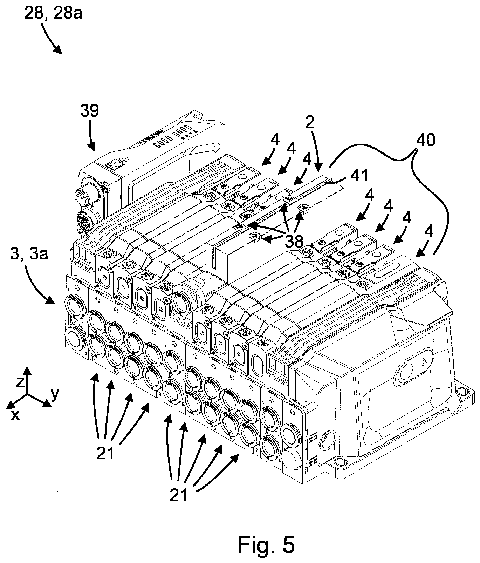

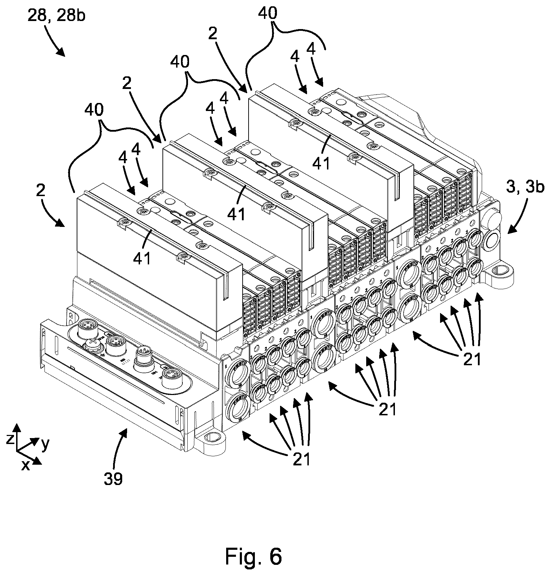

Der Trägerabschnitt 3 ist insbesondere Teil einer Ventilinsel 28. Der Trägerabschnitt 3 dient dazu, den Sicherheitsmodul-Aufbau 2 sowie mehrere Ventilmodule 4 (siehe z.B. Figur 5 oder 6) zu tragen. Bevorzugt verfügt der Trägerabschnitt 3 über eine oder mehrere pneumatische Leitungen 5, die insbesondere dazu dienen, die Ventilmodule 4 mit Druckluft zu versorgen und/oder Druckluft von den Ventilmodulen 4 abzuführen. Die eine oder mehreren pneumatischen Leitungen 5 verlaufen insbesondere entlang der y-Richtung, die auch als Aufreihungsrichtung bezeichnet werden kann. Bevorzugt verfügt der Trägerabschnitt 3 ferner über eine elektrische Leitungsanordnung 6, die insbesondere eine oder mehrere Spannungsversorgungs-Leitungen und/oder eine oder mehrere Kommunikations-Leitungen umfasst. Die elektrische Leitungsanordnung 6 versorgt ein oder mehrere Ventilmodule 4 (und das Sicherheitsmodul 7) mit elektrischer Energie und/oder Kommunikationssignalen. Die elektrische Leitungsanordnung 6 verläuft insbesondere entlang der y-Richtung. Beispielsweise wird über die elektrische Leitungsanordnung 6 ein Kommunikationsbus bereitgestellt.

Der Trägerabschnitt 3 stellt mehrere Bestückungsplätze bereit, die in y-Richtung aneinandergereiht sind und sich in z-Richtung insbesondere auf gleicher Höhe befinden. Die Bestückungsplätze umfassen wenigstens einen Bestückungsplatz zur Anbringung des Sicherheitsmodul-Aufbaus 2 sowie mehrere Bestückungsplätze zur Anbringung von Ventilmodulen 4. Die Bestückungsplätze sind insbesondere auf einer Oberseite 18 des Trägerabschnitts 3 angeordnet. Die Oberseite 18 ist vorzugsweise normal zur z-Richtung ausgerichtet.

Exemplarisch umfasst der Trägerabschnitt 3 den elektrischen Trägerabschnitt-Anschluss 13, an den die Sicherheitsmodul-Anschlussanordnung 12 angeschlossen werden kann, um das Sicherheitsmodul 7 elektrisch und/oder kommunikativ mit der Leitungsanordnung 6 zu verbinden. Bevorzugt verfügt der Trägerabschnitt 3 über eine Leiterplatte 17, auf der zweckmäßigerweise der Trägerabschnitt-Anschluss 13 angeordnet ist. Exemplarisch ist die Leiterplatte 17 mit ihrer flächenmäßig größten Seite horizontal ausgerichtet, so dass der Normalenvektor dieser Seite vertikal nach oben zeigt.

Exemplarisch ist der Trägerabschnitt-Anschluss 13 gegenüber einer Oberseite 18 des Trägerabschnitts 3 in z-Richtung nach unten versetzt angeordnet. Optional ist der Trägerabschnitt-Anschluss 13 in Bezug auf die vertikale Erstreckung des Trägerabschnitts 3 mittig (oder in einem mittleren Bereich) angeordnet, insbesondere in den unteren 60% der vertikalen Erstreckung des Trägerabschnitts 3.

Der Trägerabschnitt 3 verfügt zweckmäßigerweise über eine von oben zugängliche Vertiefung 58, in der sich der Trägerabschnitt-Anschluss 13 befindet. Der Trägerabschnitt-Anschluss 13 und/oder die Vertiefung 58 befindet sich exemplarisch in der hinteren Hälfte der x-Erstreckung des Trägerabschnitts 3.

Der Trägerabschnitt 3 umfasst zweckmäßigerweise wenigstens einen pneumatischen Anschluss 19, der insbesondere als Schlauchanschluss ausgebildet ist. Exemplarisch umfasst der Trägerabschnitt 3 wenigstens zwei (exemplarisch als Schlauchanschlüsse ausgebildete) pneumatische Anschlüsse 19. Der Trägerabschnitt 3 verfügt über eine Anschlussseite 20, an der die wenigstens zwei pneumatischen Anschlüsse 19 angeordnet sind. Die Anschlussseite 20 ist in Bezug auf die x-Richtung vorne an dem Trägerabschnitt 3 angeordnet und kann auch als Vorderseite des Trägerabschnitts 3 bezeichnet werden. Exemplarisch sind die zwei pneumatischen Anschlüsse 19 untereinander angeordnet. Die beiden pneumatischen Anschlüsse 19 sind insbesondere pneumatisch mit den pneumatischen Leitungen 5 verbunden und dienen insbesondere zur Druckluftversorgung und/oder zum Druckluftablass der Ventilinsel 28.

Der Trägerabschnitt 3 umfasst wenigstens ein Trägermodul 21. Bevorzugt umfasst der Trägerabschnitt 3 eine Mehrzahl an Trägermodulen 21, die insbesondere in y-Richtung aneinandergereiht angeordnet sind. Bevorzugt umfassen mehrere oder sämtliche Trägermodule 21 zwei insbesondere untereinander angeordnete pneumatische Anschlüsse, die exemplarisch als Schlauchanschlüsse ausgeführt sind. Die Trägermodule 21 sind vorzugsweise jeweils plattenförmig ausgeführt. Die flächenmäßig größte Seiten der Trägermodule 21 sind zweckmäßigerweise jeweils orthogonal zur y-Richtung ausgerichtet.

Jedes Trägermodul 21, auf dem sich ein Sicherheitsmodul-Aufbau 2 befindet soll auch als Sicherheitsmodul-Trägermodul bezeichnet werden. Jedes Trägermodul 21, auf dem sich ein Ventilmodul befindet, soll auch als Ventilmodul-Trägermodul bezeichnet werden. Jedes Ventilmodul-Trägermodul verfügt zweckmäßigerweise über zwei pneumatische Anschlüsse, die insbesondere als Schlauchanschlüsse ausgeführt sind, und mittels des jeweils auf dem Ventilmodul-Trägermodul angeordneten Ventilmoduls 4 pneumatisch schaltbar - also insbesondere belüftbar und/oder entlüftbar sind.

Die Figur 2 zeigt eine Schnittdarstellung einer Ventilinsel 28. Exemplarisch handelt es sich um eine Ventilinsel 28 einer ersten Baugröße, die auch als erste Ventilinsel 28a bezeichnet werden soll. Die Ventilinsel 28 umfasst den Sicherheitsmodul-Aufbau 2 und den Trägerabschnitt 3, die insbesondere wie vorstehend erläutert ausgeführt sind. Der Trägerabschnitt 3 der ersten Ventilinsel 28a soll auch als erster Trägerabschnitt 3a bezeichnet werden. In der Figur 2 ist der Sicherheitsmodul-Aufbau 2 auf dem Trägerabschnitt 3 angebracht. Die erste Ventilinsel 28a ist für einen größeren Druckluft-Durchfluss ausgelegt als eine nachstehend erläuterte zweite Ventilinsel 28b. Dementsprechend ist die erste Ventilinsel 28a größer dimensioniert als die zweite Ventilinsel 28b. Insbesondere ist die x-Erstreckung des Trägerabschnitts 3 bei der ersten Ventilinsel 28a größer als bei der zweiten Ventilinsel 28b. Wie nachstehend näher erläutert, kann für beide Ventilinseln 28a und 28b das gleiche Sicherheitsmodul 7 verwendet werden, und zwar durch die Verwendung des entsprechenden Adaptermoduls 8.

Bei der ersten Ventilinsel 28a ist die x-Erstreckung des Trägerabschnitts 3 größer als die x-Erstreckung des Sicherheitsmoduls 7. Exemplarisch beträgt bei der ersten Ventilinsel 28a die x-Erstreckung des Trägerabschnitts 3 mindestens das 1,2-Fache oder mindestens das 1,3-Fache der x-Erstreckung des Sicherheitsmoduls 7. Exemplarisch sind die Rückseiten des Sicherheitsmoduls 7, Adaptermoduls 8 und des Trägerabschnitts 8 in (negativer) x-Richtung bündig zueinander ausgeführt. Diese Rückseiten sind normal zur negativen x-Richtung ausgerichtet.

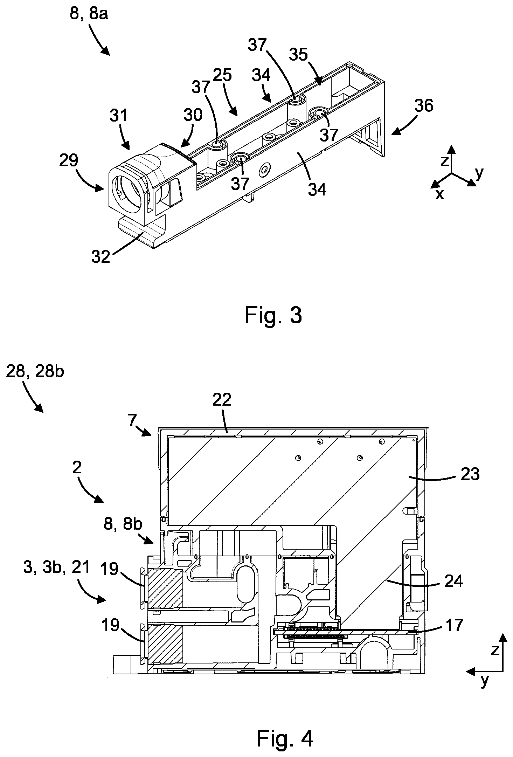

In der Figur 3 ist eine exemplarische Ausgestaltung des Adaptermoduls 8 gezeigt. Es handelt sich hier insbesondere um ein Adaptermodul 8, das für die erste Ventilinsel 28a ausgelegt ist. Dieses Adaptermodul 8 soll auch als erstes Adaptermodul 8a bezeichnet werden.

Bevorzugt verfügt das Adaptermodul 8 über einen pneumatischen Ausgang 29, der insbesondere als Schlauchanschluss ausgeführt ist. Der pneumatische Ausgang 29 ist exemplarisch in x-Richtung vorne, insbesondere an der Vorderseite, des Adaptermoduls 8, insbesondere des Adaptermodul-Hauptabschnitts 25, angeordnet. In einem Zustand, in dem der Sicherheitsmodul-Aufbau 2 auf dem Trägerabschnitt 3 angebracht ist, dient der pneumatische Ausgang 29 insbesondere dazu, um Abluft, insbesondere eine gemeinsame Abluft, von Ventilmodulen 4 der Ventilinsel 28 abzuführen und/oder ist pneumatisch mit wenigstens einer der pneumatischen Leitungen 5 verbunden.

Exemplarisch erstreckt sich der pneumatische Ausgang 29 in z-Richtung höher als der Adaptermodul-Hauptabschnitt 25. Exemplarisch ist der pneumatische Ausgang 29 Teil eines Ausgangsabschnitts 31, der über eine von dem pneumatischen Ausgang 29 abgewandte, senkrecht ausgerichtete Ausgangsabschnitt-Rückseite 30 verfügt, die in einem Zustand, in dem das Adaptermodul 8 an dem Sicherheitsmodul 7 angeordnet ist, an einer Vorderseite des Sicherheitsmoduls 7 anliegt.

Bevorzugt verfügt das Adaptermodul 8 über eine Befestigungsstruktur 32, insbesondere einen Befestigungsvorsprung, zur Befestigung des Adaptermoduls 8 an dem Trägerabschnitt 3. Die Befestigungsstruktur 32 ist exemplarisch an einer Vorderseite des Adaptermoduls 8, insbesondere des Adaptermodul-Hauptabschnitts 25 angeordnet, exemplarisch unterhalb des pneumatischen Ausgangs 29. Exemplarisch ragt die Befestigungsstruktur 32 in x-Richtung nach vorne von dem Adaptermodul-Hauptabschnitt 25 ab. In einem Zustand, in dem der Sicherheitsmodul-Aufbau 2 an dem Trägerabschnitt 3 befestigt ist (vgl. z.B. Fig. 2), steht die Befestigungsstruktur 32 mit einer korrespondierend ausgeführten Trägerabschnitt-Befestigungsstruktur 33 des Trägerabschnitts 3 in Eingriff, um so insbesondere einen in z-Richtung nach oben wirkenden Formschluss bereitzustellen.

Der Adaptermodul-Hauptabschnitt 25 ist vorzugsweise wannenförmig ausgeführt. Exemplarisch verfügt der Adaptermodul-Hauptabschnitt 25 über zwei senkrecht zur y-Richtung ausgerichtete längsseitige Seitenwände 34 und/oder über eine senkrecht zur z-Richtung ausgerichtete (insbesondere offene) Hauptabschnitt-Oberseite 35. In einem Zustand, in dem der Sicherheitsmodul-Aufbau 2 an dem Trägerabschnitt 3 befestigt ist, liegt exemplarisch die Unterseite des Sicherheitsmodul-Hauptabschnitts 23 an der Hauptabschnitt-Oberseite 35 des Adaptermoduls 8 an. Bevorzugt verfügt der Adaptermodul-Hauptabschnitt 25 ferner über eine Bodenwand, in der zweckmäßigerweise die Durchbrechung 27 angeordnet ist.

Optional verfügt das Adaptermodul 8 über eine Anlagestruktur 36, die exemplarisch an der Rückseite (in Bezug auf die x-Richtung) des Adaptermoduls 8 angeordnet ist und sich insbesondere ausgehend von dem Adaptermodul-Hauptabschnitt 25 nach unten erstreckt. In einem Zustand, in dem der Sicherheitsmodul-Aufbau 2 an dem Trägerabschnitt 3 befestigt ist, liegt die Anlagestruktur 36 an einer Rückseite des Trägerabschnitts 3 an (vgl. z.B. Fig. 2).

Das Adaptermodul 8 verfügt vorzugsweise über wenigstens eine, exemplarisch mehrere, Befestigungselement-Durchführungen 37, die insbesondere als Schraubendurchführungen ausgeführt sind. Die Befestigungselement-Durchführungen 37 verlaufen in z-Richtung.

Bevorzugt umfasst der Sicherheitsmodul-Aufbau 2 wenigstens ein durch das Sicherheitsmodul 7 und das Adaptermodul 8 verlaufendes Befestigungselement 38, insbesondere eine Schraube, zur Befestigung des Sicherheitsmodul-Aufbaus 2 an dem Trägerabschnitt 3. Exemplarisch umfasst der Sicherheitsmodul-Aufbau 2 mehrere, insbesondere vier, als Schrauben ausgeführte Befestigungselemente 38, die in z-Richtung durch das Sicherheitsmodul 7 und das Adaptermodul 8 (insbesondere durch die Befestigungselement-Durchführungen 37) hin zu dem Trägerabschnitt 3 verlaufen und so den Sicherheitsmodul-Aufbau 2 am Trägerabschnitt 3 befestigen. Die Befestigungselemente 38 sind z.B. in den Figuren 5 und 6 zu sehen.

Die Figur 4 zeigt eine Schnittdarstellung einer Ventilinsel 28 einer zweiten Baugröße, die auch als zweite Ventilinsel 28b bezeichnet werden soll. Die Ventilinsel 28 umfasst den Sicherheitsmodul-Aufbau 2 und den Trägerabschnitt 3, die (bis auf die nachstehend erläuterten Unterschiede) insbesondere wie vorstehend erläutert ausgeführt sind. Der Trägerabschnitt 3 der zweiten Ventilinsel 28b soll auch als zweiter Trägerabschnitt 3b bezeichnet werden. Die zweite Ventilinsel 28b ist kleiner dimensioniert als die erste Ventilinsel 28a. Bei der zweiten Ventilinsel 28b ist die x-Erstreckung des Trägerabschnitts 3 größer als die x-Erstreckung des Sicherheitsmoduls 7. Exemplarisch beträgt bei der zweiten Ventilinsel 28b die x-Erstreckung des Trägerabschnitts 3 maximal das 1,2-Fache oder maximal das 1,15-Fache der x-Erstreckung des Sicherheitsmoduls 7.

Das für die zweite Ventilinsel 28b ausgelegte Adaptermodul 8 soll auch als zweites Adaptermodul 8b bezeichnet werden. Bis auf die nachstehend erläuterten Unterschiede gelten die vorstehenden Erläuterungen zu dem Adaptermodul 8 oder zu dem ersten Adaptermodul 8a vorzugsweise auch für das zweite Adaptermodul 8b.

Die x-Erstreckung des zweiten Adaptermoduls 8b ist zweckmäßigerweise kleiner als die x-Erstreckung des ersten Adaptermoduls 8a. Das zweite Adaptermodul 8b verfügt zweckmäßigerweise über keinen pneumatischen Ausgang, insbesondere über keinen Schlauchanschluss, und dementsprechend insbesondere über keinen Ausgangsabschnitt. Ferner hat das zweite Adaptermodul 8b vorzugsweise keinen Befestigungsvorsprung an seiner Vorderseite. Ferner kann das zweite Adaptermodul 8b ohne rückseitige Anlagestruktur bereitgestellt sein.

Die Figur 5 zeigt eine perspektivische Darstellung der ersten Ventilinsel 28a. Die Figur 6 zeigt eine perspektive Darstellung der zweiten Ventilinsel 28b. Im Folgenden soll insbesondere auf Merkmale eingegangen werden, die bei beiden Ventilinseln 28a, 28b gegeben sein können. In diesem Zusammenhang soll allgemein auf die Ventilinsel 28 Bezug genommen werden.

Die Ventilinsel 28 umfasst den Trägerabschnitt 3, wenigstens einen auf dem Trägerabschnitt 3 angeordneten Sicherheitsmodul-Aufbau 2 sowie mehrere auf dem Trägerabschnitt 3 angeordnete Ventilmodule 4. Der Sicherheitsmodul-Aufbau 2 ist ausgebildet, mittels der Schalteinrichtung 9 die elektrische Versorgung der Ventilmodule 4 abzuschalten. Der Sicherheitsmodul-Aufbau 2 und die Ventilmodule 4 sind in y-Richtung aneinandergereiht.

Bevorzugt umfasst die Ventilinsel 28 einen Kommunikationsabschnitt 39, der beispielsweise als Kommunikationsmodul ausgeführt ist und insbesondere in y-Richtung an einem Ende der Ventilinsel 28 angeordnet ist. Der Kommunikationsabschnitt 39 umfasst zweckmäßigerweise einen oder mehrere Kommunikationsanschlüsse und/oder Spannungsversorgungsanschlüsse.

Die Ventilinsel 28 verfügt über wenigstens eine Sicherheitszone 40. Bevorzugt kann die Ventilinsel 28 mehrere Sicherheitszonen 40 aufweisen, wie z.B. in der Figur 6 gezeigt. Jede Sicherheitszone 40 umfasst einen jeweiligen Sicherheitsmodul-Aufbau 2 mit einem jeweiligen Sicherheitsmodul 7 sowie mehrere jeweilige Ventilmodule 4, deren elektrische Versorgung über das jeweilige Sicherheitsmodul 7 (der jeweiligen Sicherheitszone 40) abgeschaltet werden kann. Ein Abschalten der elektrischen Versorgung soll auch als elektrisches Abschalten der Ventilmodule 4 bezeichnet werden. Die Ventilmodule 4 sind in y-Richtung unmittelbar an dasjenige Sicherheitsmodul 7 angereiht, das derselben Sicherheitszone 40 wie die Ventilmodule 4 zugehörig ist. Exemplarisch können mehrere Sicherheitszonen 40 in y-Richtung aneinandergereiht sein. Jedes Sicherheitsmodul 7 kann zweckmäßigerweise unabhängig von den anderen Sicherheitsmodulen 7 den Sicherheitszustand einnehmen und die jeweils zugeordneten Ventilmodule 4 (derselben Sicherheitszone 40) elektrisch abschalten, unabhängig davon, ob Ventilmodule 4 einer oder mehrerer anderer Sicherheitszonen 40 elektrisch abgeschaltet werden. Insbesondere ist die Ventilinsel 28 ausgebildet, mittels den Sicherheitsmodulen 7 verschiedene Sicherheitszonen 40 unabhängig voneinander elektrisch abzuschalten. Insbesondere können Ventilmodule 4 verschiedener Sicherheitszonen 40 separat voneinander elektrisch abgeschaltet werden.

In jeder Sicherheitszone 40 ragt das jeweilige Sicherheitsmodul 7 in Höhenrichtung z über die Ventilmodule 4 hinaus. Exemplarisch ist in jeder Sicherheitszone der Höhenunterschied zwischen der Oberseite (insbesondere dem höchsten Punkt) des Sicherheitsmoduls 7 und der Oberseite (insbesondere dem höchsten Punkt) jedes Ventilmoduls 4 der Sicherheitszone 40 mindestens so groß wie die y-Erstreckung des Sicherheitsmoduls 7. Optional verfügt jedes Sicherheitsmodul 7 an seiner Oberseite über eine sich über die Längserstreckung (also die x-Erstreckung) des jeweiligen Sicherheitsmoduls 7 erstreckende Markierung 41. Die Markierung 41 ist beispielsweise ein Element, das farblich gegenüber dem übrigen Sicherheitsmodul-Gehäuse 22 abgesetzt ist. Exemplarisch verläuft die Markierung 41 streifenförmig über die gesamte Oberseite des Sicherheitsmoduls 7. Die Markierung 41 ist beispielsweise gelb. Dadurch, dass sich jedes Sicherheitsmodul 7 in z-Richtung über die Ventilmodule 4 erhebt und/oder über die Markierung 41 verfügt, sind die verschiedenen Sicherheitszonen 40 für den Anwender schnell erkennbar.

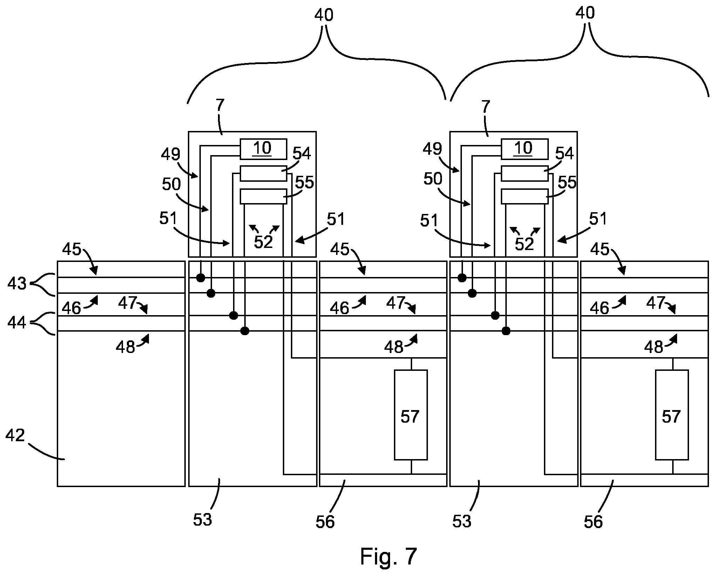

Unter Bezugnahme auf das Blockdiagramm der Figur 7 soll im Folgenden auf eine Verschaltung der Spannungsversorgung der Ventilinsel 28 eingegangen werden. Die nachstehend erläuterten Abschnitte - der Spannungsversorgungsabschnitt 42, Verteilungsabschnitt 53 und Verbraucherabschnitt 56 - sind insbesondere als funktionale Abschnitte zu verstehen.

Der Spannungsversorgungsabschnitt 42 stellt zweckmäßigerweise eine erste Spannungsversorgung 43 und eine zweite Spannungsversorgung 44 bereit, die zweckmäßigerweise galvanisch voneinander getrennt sind. Jede Spannungsversorgung 43, 44 verfügt über zwei jeweilige elektrische Leitungen 45, 46, 47, 48, zwischen denen im Betrieb die jeweils bereitgestellte elektrische Versorgungsspannung anliegt. Die erste Spannungsversorgung 43 umfasst exemplarisch eine erste elektrische Leitung 45 und eine zweite elektrische Leitung 46, zwischen denen im Betrieb eine erste elektrische Versorgungsspannung bereitgestellt wird. Die zweite Spannungsversorgung 44 umfasst exemplarisch eine dritte elektrische Leitung 47 und eine vierte elektrische Leitung 48, zwischen denen im Betrieb eine zweite elektrische Versorgungsspannung bereitgestellt wird.

Der Spannungsversorgungsabschnitt 42 ist beispielsweise in dem Kommunikationsabschnitt 39 (und/oder dem Trägerabschnitt 3) realisiert und ist im Betrieb zweckmäßigerweise an zwei (insbesondere separaten, vorzugsweise galvanisch getrennten, und/oder externen) Spannungsquellen angeschlossen, um die beiden Versorgungsspannungen bereitzustellen.

Ein (insbesondere im Trägerabschnitt 3 realisierter) Verteilungsabschnitt 53 führt die elektrischen Leitungen 45, 46, 47, 48 weiter. Insbesondere werden die elektrischen Leitungen 45, 46, 47, 48 durch den Verteilungsabschnitt 53 zu einem Verbraucherabschnitt 56 durchgeschleift. Der Verteilungsabschnitt 53 zweigt von den elektrischen Leitungen 45, 46, 47, 48 jeweils die erste Versorgungsspannung und die zweite Versorgungsspannung ab und führt diese dem Sicherheitsmodul 7 zu. Die erste Versorgungsspannung wird zweckmäßigerweise über den ersten elektrischen Versorgungsanschluss 15 zugeführt und die zweite Versorgungsspannung über den zweiten elektrischen Versorgungsanschluss 16.

Die Steuereinheit 10 des Sicherheitsmoduls 7 wird zweckmäßigerweise ausschließlich mit der ersten Versorgungsspannung gespeist. Das Sicherheitsmodul 7 verfügt über eine erste Sicherheitsmodul-Spannungszone zur elektrischen Versorgung der Steuereinheit 10. Die erste Sicherheitsmodul-Spannungszone umfasst zweckmäßigerweise elektrische Steuereinheit-Versorgungsleitungen 49, 50 über die die von dem Verteilungsabschnitt 43 zugeführte erste Versorgungsspannung der Steuereinheit 10 zugeführt wird.

Das Sicherheitsmodul 7 verfügt ferner über eine zweite Sicherheitsmodul-Spannungszone für die elektrische Versorgung mehrerer Ventilmodule 4. Die zweite Sicherheitsmodul-Spannungszone ist vorzugsweise galvanisch von der ersten Sicherheitsmodul-Spannungszone getrennt. Die zweite Sicherheitsmodul-Spannungszone umfasst zweckmäßigerweise elektrische Ventilmodul-Versorgungsleitungen 51, 52, die über die Schalteinrichtung 9 laufen. Die Schalteinrichtung 9 - und damit die Abschaltung der elektrischen Versorgung der Ventilmodule 4 - ist vorzugsweise zweikanalig ausgeführt. Exemplarisch verfügt die Schalteinrichtung 9 über einen ersten Schalter 54 zur Unterbrechung der ersten elektrischen Ventilmodul-Versorgungsleitung 51 und einen zweiten Schalter 55 zur Unterbrechung der zweiten elektrischen Ventilmodul-Versorgungsleitung 52. Zwischen den beiden Ventilmodul-Versorgungsleitungen 51, 52 ist eine elektrische Versorgungsspannung - exemplarisch die zweite elektrische Versorgungsspannung - zur elektrischen Versorgung der Ventilmodule 4 bereitstellbar.

Die elektrischen Ventilmodul-Versorgungsleitungen 51, 52 verlaufen über die Schalteinrichtung 9 (und exemplarisch über den Verteilungsabschnitt 53) zu einem Verbraucherabschnitt 56, der beispielsweise die Ventilmodule 4 (und/oder Trägermodule 21) einer Sicherheitszone 40 umfasst, um die zweite elektrische Versorgungsspannung diesem Verbraucherabschnitt 56 zuzuführen. Die zweite elektrische Versorgungsspannung wird dazu verwendet, um mehrere elektrische Verbraucher, beispielsweise Magnetventile, der Ventilmodule 4 mit elektrischer Energie zu versorgen. Der Verbraucherabschnitt 56 umfasst einen elektrischen Verbraucher 57, der die Gesamtheit der aus der zweiten Versorgungsspannung gespeisten elektrischen Verbraucher repräsentieren soll.

Der Verteilungsabschnitt 53, das Sicherheitsmodul 7 und der Verbraucherabschnitt 56 bilden zusammen eine Sicherheitszone 40.

Durch den Verbraucherabschnitt 56 werden die von dem Verteilungsabschnitt 53 kommenden (und insbesondere nicht über das Sicherheitsmodul 7 geführten) elektrischen Leitungen 45, 46, 47, 48 vorzugsweise zu einer weiteren Sicherheitszone 40 weitergeführt, insbesondere durchgeschleift. Die weitere Sicherheitszone 40 umfasst einen weiteren Verteilungsabschnitt 53, ein weiteres Sicherheitsmodul 7 und einen weiteren Verbraucherabschnitt 56. Die weitere Sicherheitszone 40 (und deren Komponenten) ist zweckmäßigerweise wie die bereits erläuterte Sicherheitszone 40 ausgeführt.

Wie vorstehend bereits erläutert, wird durch die Verwendung des Adaptermoduls 8, insbesondere durch die Verwendung zweier verschiedener Adaptermodule 8a, 8b möglich, für wenigstens zwei verschiedene Ventilinseln 28a, 28b, die sich in ihrer Baugröße unterscheiden, baugleiche Sicherheitsmodule 7 zu verwenden.

Beispielsweise kann ein Sicherheitsmodul-Aufbau bereitgestellt werden, der das Sicherheitsmodul 7, das erste Adaptermodul 8a für die erste Ventilinsel 28a, und ferner das unterschiedlich zum ersten Adaptermodul 8a ausgeführte zweite Adaptermodul 8b umfasst, das alternativ zum ersten Adaptermodul an dem Sicherheitsmodul anordenbar, insbesondere anbringbar, ist, und dazu dient, das Sicherheitsmodul 7 an der zweiten Ventilinsel 28b anzubringen, die unterschiedlich zur ersten Ventilinsel 28a ausgeführt ist.

Ferner kann eine Anordnung aus der ersten Ventilinsel 28a und der zweiten Ventilinsel 28b bereitgestellt werden, wobei das Sicherheitsmodul 7 der ersten Ventilinsel 28a über das erste Adaptermodul 8a an dem ersten Trägerabschnitt 3a befestigt ist und das Sicherheitsmodul 7 der zweiten Ventilinsel 28b über das zweite Adaptermodul 8b an dem zweiten Trägerabschnitt 3b befestigt ist, wobei die Sicherheitsmodule 7 der beiden Ventilinseln 28a, 28b baugleich ausgeführt sind.

## Patentansprüche

1. Sicherheitsmodul-Aufbau (2) für eine Ventilinsel (28), umfassend ein Sicherheitsmodul (7) mit einer Schalteinrichtung (9) zur Abschaltung einer elektrischen Versorgung mehrerer auf einem Trägerabschnitt (3) der Ventilinsel (28) angeordneter Ventilmodule (4), ferner umfassend ein an dem Sicherheitsmodul (7) angeordnetes Adaptermodul (8), über das das Sicherheitsmodul (7) an dem Trägerabschnitt (3) anbringbar ist.

2. Sicherheitsmodul-Aufbau (2) nach Anspruch 1, wobei das Adaptermodul (8) über einen pneumatischen Ausgang (29), insbesondere einen Schlauchanschluss, verfügt.

3. Sicherheitsmodul-Aufbau (2) nach einem der voranstehenden Ansprüche, wobei das Adaptermodul (8) länglich ausgeführt ist und sich seiner Längsrichtung (x) zumindest über eine Längserstreckung des Sicherheitsmoduls (7) hinweg erstreckt.

4. Sicherheitsmodul-Aufbau (2) nach einem voranstehenden Anspruch, wobei das Sicherheitsmodul (7) einen Sicherheitsmodul-Hauptabschnitt (23) und einen von dem Sicherheitsmodul-Hauptabschnitt (23) nach unten abragenden Sicherheitsmodul-Anschlussabschnitt (24) umfasst, der sich durch eine Durchbrechung (27) des Adaptermoduls (8) hindurch erstreckt.

5. Sicherheitsmodul-Aufbau (2) nach einem voranstehenden Anspruch, wobei die Schalteinrichtung (9) einen ersten Schalter (54) zur Unterbrechung einer ersten elektrischen Ventilmodul-Versorgungsleitung (51) und einen zweiten Schalter (55) zur Unterbrechung einer zweiten elektrischen Ventilmodul-Versorgungsleitung (52) aufweist, wobei zwischen den beiden Ventilmodul-Versorgungsleitungen (51, 52) eine elektrische Versorgungsspannung zur elektrischen Versorgung der Ventilmodule (4) bereitstellbar ist.

6. Sicherheitsmodul-Aufbau (2) nach einem voranstehenden Anspruch, wobei das Sicherheitsmodul (7) ferner über eine Lichtausgabeeinrichtung (11) verfügt und ausgebildet ist mittels der Lichtausgabeeinrichtung (11) einen Sicherheitszustand und/oder einen Normalzustand anzuzeigen, wobei im Sicherheitszustand die elektrische Versorgung mittels der Schalteinrichtung (9) abgeschaltet ist und im Normalzustand die elektrische Versorgung nicht mittels der Schalteinrichtung (9) abgeschaltet ist.

7. Sicherheitsmodul-Aufbau (2) nach einem voranstehenden Anspruch, ferner umfassend wenigstens ein durch das Sicherheitsmodul (7) und das Adaptermodul (8) verlaufendes Befestigungselement (38), insbesondere eine Schraube, zur Befestigung des Sicherheitsmodul-Aufbaus (2) an dem Trägerabschnitt (3).

8. Sicherheitsmodul-Aufbau (2) nach einem voranstehenden Anspruch, wobei das Sicherheitsmodul über eine Steuereinheit (10) zur Ansteuerung der Schalteinrichtung (9) verfügt, eine erste Sicherheitsmodul-Spannungszone zur elektrischen Versorgung der Steuereinheit (10) und eine von der ersten Sicherheitsmodul-Spannungszone galvanisch getrennte zweite Sicherheitsmodul-Spannungszone für die elektrische Versorgung der Ventilmodule (4).

9. Sicherheitsmodul-Aufbau (2) nach einem voranstehenden Anspruch, wobei das Sicherheitsmodul (7) über einen Kommunikationsanschluss (14) verfügt, über den das Sicherheitsmodul (7) an einem Kommunikationsbus der Ventilinsel (28) anschließbar ist, und das Sicherheitsmodul (7) ausgebildet ist, über den Kommunikationsanschluss (14) ein Sicherheitssignal zu empfangen und gemäß dem Sicherheitssignal die elektrische Versorgung der Ventilmodule (4) abzuschalten.

10. Sicherheitsmodul-Aufbau (2) nach einem voranstehenden Anspruch, wobei das Sicherheitsmodul (7) an seiner Oberseite über eine sich über die Längserstreckung (x) des Sicherheitsmoduls (7) erstreckende Markierung (41) verfügt.

11. Sicherheitsmodul-Aufbau (2) nach einem voranstehenden Anspruch, wobei das Adaptermodul (8) ein erstes Adaptermodul (8a) und die Ventilinsel (28) eine erste Ventilinsel (28a) ist, und der Sicherheitsmodul-Aufbau (2) ferner über ein unterschiedlich zum ersten Adaptermodul (8a) ausgeführtes zweites Adaptermodul (8b) verfügt, das alternativ zum ersten Adaptermodul (8a) an dem Sicherheitsmodul (7) anordenbar ist, und dazu dient, das Sicherheitsmodul (7) an einer zweiten Ventilinsel (28b) anzubringen, die unterschiedlich zur ersten Ventilinsel (28a) ausgeführt ist.

12. Ventilinsel (28), umfassend einen Trägerabschnitt (3), mehrere auf dem Trägerabschnitt (3) angeordnete Ventilmodule (4) und ein Sicherheitsmodul-Aufbau (2) nach einem der Ansprüche 1 bis 11, wobei der Sicherheitsmodul-Aufbau (2) auf dem Trägerabschnitt (3) angeordnet ist und ausgebildet ist, mittels der Schalteinrichtung (9) die elektrische Versorgung der Ventilmodule (4) abzuschalten.

13. Ventilinsel (28) nach Anspruch 12, wobei das Sicherheitsmodul (7) in Höhenrichtung (z) über die Ventilmodule (4) hinausragt.

14. Ventilinsel (28) nach Anspruch 12 oder 13, wobei die Ventilinsel (28) über mehrere Sicherheitszonen (40) verfügt, wobei jede Sicherheitszone (40) einen jeweiligen Sicherheitsmodul-Aufbau (2) mit einem jeweiligen Sicherheitsmodul (7) sowie mehrere Ventilmodule (4) umfasst, deren elektrische Versorgung über das jeweilige Sicherheitsmodul (7) der jeweiligen Sicherheitszone (40) abschaltbar ist, insbesondere derart, dass Ventilmodule (4) verschiedener Sicherheitszonen (40) separat voneinander elektrisch abschaltbar sind.

15. Verfahren zum Betrieb einer Ventilinsel nach einem der Ansprüche 12 bis 14, umfassend den Schritt: Abschalten der elektrischen Versorgung der Ventilmodule (4) mittels der Schalteinrichtung (9).
